# EUROPÄISCHE PATENTSCHRIFT

(11) **EP 1 591 016 B1**
(45) Veröffentlichungstag und Bekanntmachung des Hinweises auf die Patenterteilung: **03.01.2007**
(21) Anmeldenummer: 04021976.8
(22) Anmeldetag: 16.09.2004
(51) Int. Cl.: A23C 19/076, A23C 19/082, A23C 19/084, A23C 19/09

(54) **Verfahren zur Herstellung von Gewürze und/oder Kräuter enthaltendem Käse**
Method for producing cheese containing spices and/or herbs
Procédé de production de fromage contenant épices et/ou herbes

(30) Priorität: 28.04.2004 DE 102004020847
(43) Veröffentlichungstag der Anmeldung: 02.11.2005
(73) Patentinhaber: Hela Gewürzwerk, Hermann Laue GmbH & Co. KG, 22926 Ahrensburg (DE)
(72) Erfinder: Schindler, Franz-Josef, 48720 Rosendahl (DE)
(74) Vertreter: von Eichel-Streiber, Caspar

(56) Entgegenhaltungen:
- WO-A-92/07472
- DE-A1- 19 914 230
- DE-A1- 19 949 661
- FR-A- 2 751 179
- GB-A- 1 530 955
- US-A- 4 588 597
- DATABASE WPI Section Ch, Week 200101 Derwent Publications Ltd., London, GB; Class D13, AN 2001-005562 XP002333745 & NL 10 112 19C C2 (KAAS EN ZUIVELBOERDERIJ VANELLY) 11. August 2000 (2000-08-11) & NL 1 011 219 C2 (KAAS- EN ZUIVELBOERDERIJ VANELLY) 11. August 2000 (2000-08-11)
- DATABASE FSTA [Online] INTERNATIONAL FOOD INFORMATION SERVICE (IFIS), FRANkFURT-MAIN, DE; XP002333744 Database accession no. 80-2-12-p2196 & BOER R DE ET AL: "Low-fat semi-hard cheese from ultrafiltrated milk." NORDEUROPAEISK MEJERI-TIDSSKRIFT, Bd. 46, Nr. 3, 1980, Seiten 52-61, NIEDERLÄNDISCHES INST. FÜR MILCHWIRTSCHAFTLICHE FORSCHUNGEN, EDE, NETHERLANDS

## Beschreibung

Die Erfindung betrifft ein Verfahren zur Herstellung von Gewürze und/oder Kräuter enthaltendem Weich-, Schnitt-und/oder Hartkäse, bei welchem Rohmilch und/oder Käsereimilch in einem üblichen Käsungsprozeß verarbeitet wird.

Im Stand der Technik ist es bekannt, Weich-, Schnitt- und Hartkäse herzustellen, die mit Kräutern und/oder Gewürzen versetzt sind. So gibt es bspw. Weichkäse wie Camembert mit Pfefferkörnern, Schnittlauch oder anderen Kräutern ebenso wie Schnittkäse mit bspw. Brennessel, Paprika oder Bärlauch etc.

Bei der Herstellung derartiger Käse werden derzeit als Ausgangsprodukt für die Zugabe der Kräuter und/oder Gewürze getrocknete Gewürze und/oder Kräuter verwendet. Damit diese, wenn sie in den Käsungsprozeß eingegeben werden, den mikrobiologischen Prozeß bzw. die Käsereifung nicht stören, müssen sie möglichst keimarm sein. An Kräutern anhaftende Keime führen nämlich in dem Reifungsprozeß zu unerwünschten Gasbildungen und Fehlgärungen und somit zu untypischen und unerwünschten Eigenschaften des Käses, wie bspw. einer nicht kontrollierten Rißenbildung. Zwar ist bei bestimmten Käsesorten eine Lochbildung erwünscht, jedoch wird diese aufgrund gezielter Technologie erzielt. Die genannten Fehlgärungen führen zu einer Abwertung der Qualität des Käses bis hin zu einer Unverwertbarkeit desselben, also zu Ausschußware.

Um dieses zu verhindern, werden die getrockneten Kräuter bzw. Gewürze, die üblicherweise mit Keimmengen in der Größenordnung von 500.000 bis 2,5 Millionen pro Gramm behaftet sind, entkeimt. Dies geschieht entweder durch Bestrahlung der Kräuter/Gewürze mit radioaktiver γ-Strahlung, welches Vorgehen zwischenzeitlich zumindest in Deutschland verboten war und neuerdings wieder erlaubt, allerdings wegen der Kennzeichnungspflicht nicht gern angewendet wird; oder die Kräuter/Gewürze werden mit Sattdampf behandelt, üblicherweise bei einem Druck von etwa 10 bar und Temperaturen von 170°C bis 180°C.

Nachteil der letztgenannten Behandlungsmethode ist, daß sie zwar eine Reduzierung der Keime auf Werte < 100.000 pro Gramm, üblicherweise im Bereich um 50.000 pro Gramm, bewirken, jedoch auch zu einem erheblichen Qualitätsverlust der Kräuter/Gewürze führen. Die Kräuter und Gewürze verlieren ihre Farbe (insbesondere Kräuter werden grau statt grün) und auch einen Teil des Aromas, da die das Aroma tragenden, ätherischen Öle bei dieser Behandlung verflüchtigt werden. Zudem sind für in der Käseherstellung verwendete Kräuter wünschenswerte Keimzahlen von weniger als 10.000 pro Gramm nur in Ausnahmefällen zu erreichen.

Zwar ist es bekannt, Frischkäse oder Quark insbesondere Kräuter in Form einer Zubereitung aus Kräutern, Wasser und gegebenenfalls anderen Zusatzstoffen zuzugeben, die schonender entkeimt werden kann, allerdings wurde dies bei der Herstellung von Weich-, Schnitt- oder Hartkäse immer als nicht möglich angesehen, da diese Käse einen deutlich geringeren Feuchtigkeitsgehalt aufweisen als Frischkäse bzw. Quark und das Wasser der Zubereitung als störend für den Ablauf des Käsungs- insbesondere des Reifungsprozesses angesehen wurde.

Es ist ausgehend von dem Stand der Technik Aufgabe der Erfindung, eine Möglichkeit anzugeben, mit Kräutern und/oder Gewürzen versehenen Weich-, Schnitt- und/oder Hartkäse herzustellen, der verglichen mit der Entkeimung von Trockenkräuter/Trockengewürzen schonender entkeimte Kräuter/Gewürze enthält.

Diese Aufgabe wird überraschend durch ein in Anspruch 1 angegebenes Verfahren gelöst. Ein weiterer Aspekt der Lösung dieser Aufgabe liegt in der in Anspruch 7 angegeben Verwendung.

Es hat sich entgegen der vorherrschenden Meinung, bei der Herstellung von Weich-, Schnitt- und/oder Hartkäse könnten nur Trockenkräuter/Trockengewürze zugegeben werden, herausgestellt, daß der Reifungsprozeß auch dann "funktioniert", wenn eine Kräuter und/oder Gewürze sowie Wasser enthaltende Zubereitung zur Zugabe der Kräuter/Gewürze verwendet wird.

Dies ist um so mehr von Vorteil, da diese Zubereitung aus "normalen", also nicht entkeimten Kräutern und Wasser angesetzt und dann in schonender Weise entkeimt werden kann (Anspruch 2). Insbesondere eine Entkeimung der Zubereitung nach den Vorgaben des Anspruchs 3 führt zu einer farb- und geschmackerhaltenden Keimreduzierung, wobei je nach Ausgangsprodukt und tatsächlichem Verfahren Keimzahlen von weniger als 1.000, in der Regel sogar lediglich etwa 200, pro Gramm erzielt werden können. Damit ergibt sich noch ein weiterer Vorteil, daß nämlich in den Käsungsprozeß nicht nur farblich bessere und aromatischere Kräuter/Gewürze eingebracht werden können, sondern mit diesen auch eine geringere Gesamtkeimzahl. Das in Anspruch 3 beschriebene Entkeimungsverfahren für die Zubereitung kann selbstverständlich zur Entkeimung sämtlicher derartiger Zubereitungen verwendet werden, unabhängig, ob sie zur Käseherstellung oder sonst wie verwendet werden. Es stellt daher an sich eine eigenständige Erfindung dar.

Zur Erhöhung der Lagerungsfähigkeit der Zubereitung kann diese gemäß Anspruch 4 Stabilisatoren enthalten. Diese verhindern bei einer längeren Lagerung der Zubereitung in einem Container oder anderen Behälter eine Entmischung, also ein Absetzen der Kräuter bzw. Gewürze. Die ebenfalls in Anspruch 4 erwähnten, als Zusatzstoffe möglichen Schutzkolloide bieten einen zusätzlichen Schutz der Kräuter/Gewürze hinsichtlich Farbe und/oder Aroma beim Erwärmen. Xanthan und/oder Johannisbrotkernmehl (Anspruch 5) sind ein Stabilisator und Schutzkolloid wirkende, mögliche Zusätze. Als Stabilisator kann z. B. auch Maisstärke verwendet werden.

Als besonders geeigneter Zeitpunkt im Ablauf des Käsungsprozesse, an dem die Zubereitung zugegeben werden kann, hat sich der in Anspruch 6 genannte Zeitpunkt herausgestellt.

Weitere Vorteile und Merkmale der Erfindung ergeben sich aus der nachfolgenden Beschreibung eines Ausführungsbeispiels.

Ein herkömmlicher Ablauf bei der Herstellung von Schnittkäse sieht etwa wie folgt aus:

Die Rohmilch wird standardisiert: gereinigt, thermisiert und anschließend bei 8 - 10°C gelagert. Die entstandene Käsereimilch wird entkeimt, pasteurisiert, bei 30 - 31°C und temperiert. Der temperierten Käsereimilch werden Zusätze zugegeben, nämlich Bakterienkulturen und Lab sowie ggf. weitere Zusätze wie Calcium, Salpeter und/oder Farbstoffe. Die Käsereimilch koaguliert, wird geschnitten, gerührt; Molke wird abgezogen und es wird Waschwasser zugesetzt. Dann folgt das Nachkäsen, das Vorpressen des Bruchs, das Portionieren zu den Käselaiben, und das Pressen um die Feuchtigkeit des Käses weiter zu reduzieren. Die Laibe werden dann im Salzbad gelagert und anschließend der Reifung zugeführt.

Weichkäse, und Hartkäse werden grundsätzlich auf vergleichbare Weise hergestellt, sie unterscheiden sich in der Zugabemenge des Lab und der Bakterienkultur, in den Verfahrensschritten des Waschens und der Temperaturführung sowie in der schließendlich erhaltenen Restfeuchte. Während Weichkäse eine Restfeuchte von 67% und mehr hat, hat Schnittkäse eine Restfeuchte von 54% bis 69%, während Hartkäse eine maximale Restfeuchte von 56% aufweist.

Es wurde versucht in diesem Prozeß eine Zubereitung aus Wasser, Kräutern bzw. Gewürzen und ggf. Stabilisatoren bzw. Schutzkolloiden einzubringen. Dabei wurde gefunden, daß die Zubereitung am Besten nach dem Nachkäsen, vor dem Vorpressen der Laibe zugegeben werden kann, ohne den Reifungsprozeß zu stören.

Ein mögliches Vorgehen, um die keimarme Kräutermischung zur Zugabe in den Käsungsprozeß zu erhalten, ist das folgende:

Trinkwasser wird in einer benötigten Menge bereitgestellt. Stabilisatoren und Hydrokolloide werden, falls gewünscht, in das Wasser gegeben und dispergiert. Die Kräuter/Gewürze werden zumischt. Die Mischung wird auf eine Temperatur von etwa 60°C vorerwärmt und auf dieser Temperatur für etwa 40 bis 50 Minuten gehalten. Anschließend erfolgt die schnelle Erhitzung auf 120°C für 2 Minuten. Danach wird die Mischung in einer Zeit von etwa 10 Minuten kontrolliert auf 20°C abgekühlt, aseptisch in Container abgefüllt und in einem Kühlraum bis auf 8°C bis 10°C nachgekühlt.

Nachfolgend wird anhand eines Beispiels die vorliegende Erfindung noch weiter verdeutlicht:

Zunächst wird die Herstellung einer wässrigen Kräuterzubereitung beschrieben.

Zunächst werden Hydrokolloide in Trinkwasser dispergiert. Anschließend werden Kräuter und/oder Gewürze in der gewünschten Menge zugegeben. Die entstandene Mischung wird sodann auf ca. 60°C erwärmt und für etwa eine Stunde auf dieser Temperatur gehalten. Anschließend wird die Mischung für 2 Minuten auf 120°C erhitzt. Danach wird die Mischung über 10 Minuten kontrolliert auf 20°C (Raumtemperatur) abgekühlt. Die Mischung wird dann in Behälter, Container oder ähnliches abgefüllt und bei 8°C bis 10°C nachgekühlt.

Diese Mischung kann dann bei der Herstellung eines Weich-, Schnitt oder Hartkäses verwendet werden.

Ein Beispiel für die Herstellung eines derartigen Käses ist folgendes:

Am ersten Tag wird Rohmilch gereinigt, bei 65°C thermisiert und anschließend bei 6°C bis 8°C gelagert.

Am zweiten Tag wird die Milch zur Entkeimung pasteurisiert. Dies geschieht durch Erhitzen auf 72°C für 50 Sekunden. Anschließend wird die Milch bei 30°C bis 31°C temperiert. Der Milch werden dann die erforderlichen Zusätze, nämlich Bakterienkultur und Lab sowie eventuell Calcium, Salpeter und/oder Farbstoffe, zugegeben.

Die erhaltene Mischung wird 20 Minuten stehen gelassen, in denen sie aufgrund der einsetzenden mikrobiologischen Prozesse gerinnt. Es erfolgt dann das Bruchschneiden und Rühren. Ein Teil der Molke wird abgesaugt und temperiertes Waschwasser wird zugegeben. Für ca. 30 Minuten erfolgt ein Nachkäsen. In dieser Phase wird die nach oben geschildertem Verfahren gewonnene Kräuterzubereitung zugegeben, und die Kräuter werden in dem Bruch durch anhaltendes Rühren verteilt. Weitere Molke - und mit der Molke auch ein Teil des Wasserzusatzes der Kräuterzubereitung nebst der Zusatzstoffe (Hydrokolloid) wird abgesaugt.

Der Bruch wird dann vorgepreßt, portioniert (in Käseformen verteilt) und gepreßt. Danach werden die gepreßten Laibe in ein Salzbad und werden einer anschließenden Reifung zugeführt.

Nach Ende der Reifung wird der fertige Käse abgepackt und kann der weiteren Verwendung zugeführt, bspw. zunächst gelagert, werden.

## Patentansprüche

1. Verfahren zur Herstellung von Gewürze und/oder Kräuter enthaltendem Weichkäse, nämlich gereiftem Käse mit einer Restfeuchte von 67% und mehr, Schnittkäse, nämlich gereiftem Käse mit einer Restfeuchte von 54% bis 69% und/oder Hartkäse, nämlich gereiftem Käse mit einer Restfeuchte von maximal 56%, bei welchem Rohmilch und/oder Käsereimilch in einem üblichen Käsungsprozeß verarbeitet wird, **dadurch gekennzeichnet, daß** die Gewürze und/oder Kräuter
(a) der Rohmilch und/oder Käsereimilch als Ausgangsprodukt oder
(b) einem während des Käsungsprozesses entstehenden Zwischenprodukt
in Form einer wenigstens die Kräuter und/oder Gewürze sowie Wasser enthaltenden Zubereitung zugegeben wird.

2. Verfahren nach Anspruch 1, **dadurch gekennzeichnet, daß** die Zubereitung vor der Einbringung in die Rohmilch und/oder Käsereimilch oder in ein während des Käsungsprozesses entstehendes Zwischenprodukt zur Keimreduzierung behandelt wird.

3. Verfahren nach Anspruch 2, **dadurch gekennzeichnet, daß** die Zubereitung durch eine wie nachfolgend wiedergegebene Behandlung entkeimt wird:
1.) Erwärmen der Zubereitung auf eine erste Temperatur zwischen 40°C und 80°C, vorzugsweise zwischen 55°C und 65°C, insbesondere 60°C;
2.) Halten der Zubereitung auf dieser Temperatur über einen Zeitraum von zwischen 10 Minuten und 60 Minuten, vorzugsweise zwischen 20 Minuten und 50 Minuten, insbesondere 40 bis 50 Minuten;
3.) schnelles Erhitzen der Zubereitung auf eine Temperatur von > 90°C, vorzugsweise > 100°C, insbesondere auf 120°C in einer Zeitspanne von < 10 Minuten, vorzugsweise < 5 Minuten, insbesondere etwa 2 Minuten;
4.) Halten der Zubereitung auf der Temperatur gemäß Schritt 3.) für eine Zeitspanne von <10 Minuten, vorzugsweise < 5 Minuten, insbesondere 2 Minuten;
5.) schnelles Abkühlen der Zubereitung auf Raumtemperatur innerhalb einer Zeitspanne von < 20 Minuten, insbesondere < 15 Minuten, vorzugsweise 10 Minuten.

4. Verfahren nach einem der vorhergehenden Ansprüche, **dadurch gekennzeichnet, daß** die Zubereitung ferner einen Stabilisator und/oder ein Schutzkolloid enthält.

5. Verfahren nach Anspruch 4, **dadurch gekennzeichnet,** die Zubereitung Xanthan und/oder Johannisbrotkernmehl als Stabilisator und Schutzkolloid enthält.

6. Verfahren nach einem der vorhergehenden Ansprüche, **dadurch gekennzeichnet, daß** die Zubereitung dem während des Käsungsprozesses entstehenden Zwischenprodukt während des bzw. nach dem sogenannten Nachkäsens, insbesondere dem Bruch vor dem Vorpressen zugegeben wird.

7. Verwendung einer aus wenigstens Kräutern und/oder Gewürzen sowie Wasser bestehenden, gegebenenfalls als weiteren Zusatz einen Stabilisator und/oder ein Schutzkolloid enthaltenden Zubereitung als Zusatz bei der Herstellung von Kräutern und/oder Gewürzen enthaltendem Weichkäse, nämlich gereiftem Käse mit einer Restfeuchte von 67% und mehr, Schnittkäse, nämlich gereiftem Käse mit einer Restfeuchte von 54% bis 69% und/oder Hartkäse, nämlich gereiftem Käse mit einer Restfeuchte von maximal 56%.

## Claims

1. Process for the production of herbs and/or spices-containing soft cheese, namely matured cheese with a residual moisture content of 67% and higher, namely cutting cheese, matured cheese with a residual moisture content of 54 to 69%, and/or hard cheese, namely matured cheese with a residual moisture content of max. 56%, in which untreated milk and/or cheese milk is processed in a standard cheese making process, **characterized in that** the herbs and/or spices are added
(a) the untreated milk and/or cheese milk as a starting product, or
(b) an intermediate formed during the cheese making process,
in the form of a formulation at least containing the herbs and/or spices, as well as water.

2. Process according to claim 1, **characterized in that** the formulation undergoes a germ reduction treatment prior to introduction into the untreated milk and/or cheese milk or into an intermediate formed during the cheese making process.

3. Process according to claim 2, **characterized in that** the formulation is sterilized by a treatment described below:
1.) heating the formulation to a first temperature between 40 and 80°C, preferably between 55 and 65°C, particularly 60°C,
2.) maintaining the formulation at this temperature for between 10 and 60 minutes, preferably between 20 and 50 minutes, particularly 40 to 50 minutes,
3.) rapid heating of the formulation to a temperature of > 90°C, preferably > 100°C, particularly 120°C in a time period of < 10 minutes, preferably < 5 minutes, particularly approximately 2 minutes,
4.) maintaining the formulation at the temperature according to step 3.) for a time period of < 10 minutes, preferably < 5 minutes, particularly 2 minutes,
5.) rapid cooling of the formulation to ambient temperature within a time period of < 20 minutes, particularly < 15 minutes, preferably 10 minutes.

4. Process according to one of the preceding claims, **characterized in that** the formulation also contains a stabilizer and/or a protective colloid.

5. Process according to claim 4, **characterized in that** the formulation contains xanthane and/or carob bean flour as stabilizer and protective colloid.

6. Process according to one of the preceding claims, **characterized in that** the formulation is added to the intermediate formed during the cheese making process during or after so-called post-cheese making, particularly the break prior to prepressing.

7. Use of a formulation containing at least herbs and/or spices, as well as water and optionally as a further additive a stabilizer and/or a protective colloid, as an additive in the production of herbs and/or spices-containing soft cheese, namely matured cheese with a residual moisture content of 67% and more, cutting cheese, namely matured cheese with a residual moisture content of 54 to 69% and/or hard cheese, namely matured cheese with a residual moisture content of max. 56%.

## Revendications

1. Procédé de fabrication de fromage à pâte molle contenant des épices et/ou herbes, à savoir de fromage affiné d'une humidité résiduelle de 67 % et plus, de fromage en tranches, à savoir de fromage affiné d'une humidité résiduelle de 54 % à 69 %, et/ou de fromage à pâte pressée, à savoir de fromage affiné d'une humidité résiduelle maximale de 56 %, dans lequel du lait cru et/ou du lait de fromagerie sont transformés au cours d'un processus de caséification usuel, **caractérisé en ce que** les épices et/ou herbes sont ajoutées
(a) au lait cru et/ou au lait de fromagerie en tant que produit de départ, ou
(b) à un produit intermédiaire engendré pendant le processus de caséification
sous la forme d'une préparation contenant au moins les herbes et/ou épices, ainsi que de l'eau.

2. Procédé selon la revendication 1, **caractérisé en ce que** la préparation subit un traitement de réduction de germes avant l'ajout au lait cru et/ou au lait de fromagerie ou à un produit intermédiaire engendré pendant le processus de caséification.

3. Procédé selon la revendication 2, **caractérisé en ce que** la préparation est dégermée par un traitement tel que décrit ci-après :
1.) chauffage de la préparation à une première température comprise entre 40 °C et 80 °C, de préférence entre 55 °C et 65 °C, notamment de 60 °C ;
2.) maintien de la préparation à cette température pendant une durée comprise entre 10 minutes et 60 minutes, de préférence entre 20 minutes et 50 minutes, notamment de 40 à 50 minutes ;
3.) chauffage rapide de la préparation à une température > 90 °C, de préférence > 100 °C, notamment de 120 °C, pendant un laps de temps < 10 minutes, de préférence < 5 minutes, notamment de l'ordre de 2 minutes ;
4.) maintien de la préparation à la température selon l'étape 3.) pendant un laps de temps. < 10 minutes, de préférence < 5 minutes, notamment de 2 minutes ;
5.) refroidissement rapide de la préparation à température ambiante pendant un laps de temps < 20 minutes, notamment < 15 minutes, de préférence de 10 minutes.

4. Procédé selon l'une des revendications précédentes, **caractérisé en ce que** la préparation contient en outre un stabilisateur et/ou un colloïde de protection.

5. Procédé selon la revendication 4, **caractérisé en ce que** la préparation contient du xanthane et/ou de la farine de graines de caroube en tant que stabilisateur et colloïde de protection.

6. Procédé selon l'une des revendications précédentes, **caractérisé en ce que** la préparation est ajoutée au produit intermédiaire engendré pendant le processus de caséification pendant ou après ladite post-caséification, notamment la rupture avant le pressage préliminaire.

7. Utilisation d'une préparation constituée au moins d'herbes et/ou d'épices, ainsi que d'eau, contenant le cas échéant en tant qu'autre additif un stabilisateur et/ou un colloïde de protection, en tant qu'additif pour la fabrication de fromage à pâte molle contenant des herbes et/ou épices, à savoir de fromage affiné d'une humidité résiduelle de 67 % et plus, de fromage en tranches, à savoir de fromage affiné d'une humidité résiduelle de 54 % à 69 %, et/ou de fromage à pâte pressée, à savoir de fromage affiné d'une humidité résiduelle maximale de 56 %.
